# EUROPÄISCHE PATENTSCHRIFT

(11) **EP 1 747 945 B1**
(45) Veröffentlichungstag und Bekanntmachung des Hinweises auf die Patenterteilung: **28.08.2019**
(21) Anmeldenummer: 06115464.7
(22) Anmeldetag: 14.06.2006
(51) Int. Cl.: B60R 21/0132, B60R 21/0134

(54) **Verfahren zur Crash-Typerkennung und Vorrichtung zur Durchführung des Verfahrens**
Method for crash type recognition and device for performing this method
Procédé pour la reconnaissance du type de collision et dispositif pour mettre en oeuvre ce procédé

(30) Priorität: 28.07.2005 DE 102005035415
(43) Veröffentlichungstag der Anmeldung: 31.01.2007
(73) Patentinhaber: ROBERT BOSCH GMBH, 70442 Stuttgart (DE); Bayerische Motoren Werke Aktiengesellschaft, 80809 München (DE)
(72) Erfinder: Mindner, Klaus, 71634 Ludwigsburg (DE); Kuttenberger, Alfred, 71696 Moeglingen (DE); Theisen, Marc, 74354 Besigheim (DE); Lang, Gunther, 70569 Stuttgart (DE); Schuller, Hermann, 75223 Niefern-Oeschelbronn (DE); Bunse, Michael, 71665 Vaihingen/Enz (DE); Schoerrig, Oliver, 85579 Neubiberg (DE); Schalwig, Jan, 80797 Müchen (DE)

(56) Entgegenhaltungen:
- EP-A1- 1 331 140
- EP-A2- 0 728 624
- DE-A1- 10 317 637
- DE-A1- 19 729 960

## Beschreibung

Die vorliegende Erfindung betrifft allgemein die Erfassung eines Fahrzeugaufpralls (Crash) bei einem mit Rückhaltemitteln ausgestatteten Fahrzeug. Insbesondere betrifft die vorliegende Erfindung ein Verfahren zum Bestimmen eines Crashtyps, bei dem ein Sensorsignal mittels eines Aufprallsensors und ein Erkennungssignal mittels eines vorausschauenden Sensors erfasst werden, und wobei die beiden Signale mittels einer Recheneinheit derart miteinander verknüpft werden, dass die Erkennung einer Art des Fahrzeugaufpralls (Crashs) bereitgestellt wird.

Der Ausdruck "Fahrzeugcrash" bzw. "Crashtyp" bezieht sich auf sämtliche Vorgänge vor oder während eines Fahrzeugunfalls, bei welchem eine Entscheidung über eine Auslösung von Rückhaltemitteln getroffen werden muss. Somit umfassen "Crashs" auch Situationen mit hohen negativen Beschleunigungswerten (Verzögerungen), ohne dass eine tatsächliche Berührung bzw. Deformationen des mit Rückhaltemitteln ausgestatteten Fahrzeugs mit einem Objekt stattfinden muss.

### STAND DER TECHNIK

Herkömmliche Verfahren zum Bestimmen eines Crashtyps weisen den wesentlichen Nachteil auf, dass diese entweder nur eine Information über ein Beschleunigungssignal oder eine Information über ein Erkennungssignal eines vorausschauenden Sensors wie beispielsweise einer Kamera zur Entscheidung über eine Auslösung von Rückhaltemitteln des Fahrzeugs herangezogen wird. In unzweckmäßiger Weise stellen herkömmliche Crashtyp-Erkennungsverfahren eine unzureichende Differenzierung unterschiedlicher Crashstufen bereit. Dies betrifft insbesondere die Unterscheidung zwischen einem so genannten AZT-Crashtest und einem so genannten ODB-Crashtest. Die in der folgenden Beschreibung verwendeten Abkürzungen für die beiden Tests bezeichnen:
(i) AZT = Allianz-Zentrum-für-Technik-Crashtest; ein derartiger Crashtest bezeichnet einen Crash mit einer relativ niedrigen Geschwindigkeit des Fahrzeugs auf eine relativ harte Barriere; bei diesem Test dürfen irreversible Rückhaltemittel, d.h. Airbags oder irreversible, d.h. pyrotechnische Gurtstraffer, etc. nicht auslösen; reversible Rückhaltemittel wie beispielsweise Crash-aktive Kopfstützen, reversible Gurtstraffer, etc. dürfen bei einem derartigen AZT-Test auslösen; und
(ii) ODB-Test = Offset-Deformable-Barrier-Crashtest; bei diesem Test handelt es sich um einen Aufprall bzw. eine Berührung des Fahrzeugs mit einem Objekt, wobei das Fahrzeug eine relativ Geschwindigkeit aufweist und das Objekt bzw. die Barriere relativ weich ist; gemäß Spezifikationen muss bei einem derartigen ODB-Test sichergestellt sein, dass alle der Situation angepassten Rückhaltemittel auslösen bzw. gezündet werden.

Eine Unterscheidung der beiden Crashtypen, d.h. eine Unterscheidung des AZT-Tests von dem ODB-Test stellt eine für herkömmliche Verfahren und Vorrichtungen zur Crashauslösung komplexe Aufgabe dar. Die lediglich von Aufprallsensoren wie beispielsweise Beschleunigungs- oder Drucksensoren bis zum Zeitpunkt der notwendigen Auslösung für den ODB-Test gelieferten Sensorsignale weisen für den AZT-Test und den ODB-Test ähnliche Eigenschaften auf, derart, dass es schwierig ist, die beiden Tests zuverlässig zu unterscheiden.

Aus EP 1 331 140 A1 sind ein Verfahren mit den Merkmalen des Oberbegriffs des Anspruchs 1 sowie eine Vorrichtung mit den Merkmalen des Oberbegriffs des Anspruchs 4 bekannt.

### VORTEILE DER ERFINDUNG

Es ist daher eine Aufgabe der vorliegenden Erfindung, ein Verfahren und eine Vorrichtung zur Bestimmung eines Crashtyps bei einem Fahrzeugcrash eines mit Rückhaltemitteln ausgestatteten Fahrzeugs mit einem Objekt bereitzustellen, welche eine präzise Differenzierung zwischen einem Nichtäuslösecrash wie beispielsweise einem AZT-Crash und einem Auslösecrash wie beispielsweise einem ODB-Crash bereitstellen.

Diese Aufgabe wird erfindungsgemäß durch ein Verfahren zum Bestimmen eines Crashtyps bei einem Fahrzeugcrash mit den im Anspruch 1 angegebenen Schritten gelöst. Ferner wird die obige Aufgabe durch eine Vorrichtung mit den Merkmalen des Patentanspruchs 4 gelöst. Weitere Ausgestaltungen der Erfindung ergeben sich aus den Unteransprüchen.

Ein wesentlicher Gedanke der Erfindung besteht darin, zur Berechnung der Auslöseentscheidung neben vorhandenen Pfaden zur Ermittlung eines Crashtyp-Bestimmungssignals einen zusätzlichen Pfad einzufügen, der es gestattet, bei einem Vorliegen einer Relativgeschwindigkeitsinformation zwischen dem Fahrzeug und einem Objekt eine Differenzierung zwischen unterschiedlichen Crashtypen, insbesondere einem AZT- (Allianz-Zentrum-für-Technik-) und einem ODB-(Offset-Deformable-Barrier-) -Crashtest zu verbessern. Hierbei besteht der Vorteil des erfindungsgemäßen Verfahrens unter anderem darin, dass der vorhandene (allgemeine) Auswertealgorithmus parallel und unabhängig von einem zusätzlichen durch einen zusätzlichen Pfad bereitgestellten Algorithmus ablaufen kann. Der zusätzliche Pfad in dem Auswertealgorithmus zur Bereitstellung eines Crashtyp-Bestimmungssignals wird lediglich dann durchlaufen, wenn zusätzlich zu den entsprechenden Beschleunigungssignalen eine zugehörige Geschwindigkeitsinformation (Relativgeschwindigkeitssignal) vorliegt.

Beispielsweise besteht der Vorteil darin, dass bei einem Vorliegen von Beschleunigungssignalen und Sensorsignalen einer vorausschauenden Sensorik (berührungslose Sensorik) als unabhängige Informationen ein Crashtyp, bei dem nicht ausgelöst werden muss, zuverlässig erkannt wird. Unter einem vorausschauenden Sensor wird auch ein zur Seite oder nach hinten gerichteter Sensor verstanden, also insgesamt Sensoren, die das Umfeld des Fahrzeugs beobachten. Wenn im Folgenden von der Relativgeschwindigkeit gesprochen wird, so soll dadurch auch der einfachere Fall der Eigengeschwindigkeit erfasst sein, bzw. wenn von dem System zur Erfassung der Relativgeschwindigkeit gesprochen wird, so sei dadurch ebenso das System zur Erfassung der Eigengeschwindigkeit eingeschlossen.

Durch die Möglichkeit, eine Unterscheidbarkeit (Trennfähigkeit) zwischen einem Nichtauslösecrash und einem Auslösecrash zu verbessern, kann eine vorliegende Relativgeschwindigkeitsinformation entweder dazu herangezogen werden, bei einem gleich bleibenden ODB-Betriebsverhalten eine robustere Auslöseentscheidung bezüglich AZT-Tests bereitzustellen, oder bei einem gleich bleibenden AZT-Betriebsverhalten eine präzisere Auslösung bei ODB-Crashs bereitzustellen. Ferner kann ein Kompromiss zwischen beiden oben genannten Vorteilen erzielt werden.

In zweckmäßiger Weise verringert sich das Gesamtbetriebsverhalten durch Hinzuziehung eines zusätzlichen Pfads in dem Auslösealgorithmus auch dann nicht, wenn die Relativgeschwindigkeitsinformation, die beispielsweise durch einen vorausschauenden Sensor wie einen Radarsensor oder einen optischen Sensor erfasst wird, nicht vorliegt.

Das erfindungsgemäße Verfahren zum Bestimmen eines Crashtyps bei einem Fahrzeugcrash eines mit Rückhaltemitteln ausgestatteten Fahrzeugs mit einem Objekt weist im Wesentlichen die folgenden Schritte auf:
a) Erfassen eines Beschleunigungssignals mittels eines Aufprallsensors, wobei das Beschleunigungssignal eine Beschleunigung des Fahrzeugs bei einem Fahrzeugcrash anzeigt;
b) Erfassen eines Erkennungssignals mittels eines vorausschauenden Sensors, wobei das Erkennungssignal eine Relativgeschwindigkeit zu dem Objekt vor dem Fahrzeugcrash anzeigt oder als Vereinfachung anstatt der Erfassung der Relativgeschwindigkeit die Erfassung der Fahrzeugeigengeschwindigkeit;
c) Verknüpfen des Beschleunigungssignals mit dem Erkennungssignal mittels einer Recheneinheit und Ermitteln eines Crashtyp-Bestimmungssignals;
d) Ausgeben eines mittels der Recheneinheit ermittelten Crashtyp-Bestimmungssignals zu einer Ansteuereinheit; und
e) Ansteuern der Rückhaltemittel in Abhängigkeit von dem Crashtyp-Bestimmungssignal.

Die erfindungsgemäße Vorrichtung zur Bestimmung eines Crashtyps bei einem Fahrzeugcrash eines mit Rückhaltemitteln ausgestatteten Fahrzeugs mit einem Objekt weist im Wesentlichen auf:
a) einen Aufprallsensor zur Erfassung eines Beschleunigungssignals, wobei das Beschleunigungssignal eine Beschleunigung des Fahrzeugs bei einem Fahrzeugcrash anzeigt;
b) einen vorausschauenden Sensor zur Erfassung eines Erkennungssignals, wobei das Erkennungssignal eine Relativgeschwindigkeit zu dem Objekt vor dem Fahrzeugcrash anzeigt, oder als Vereinfachung ein System zur Messung der Eigengeschwindigkeit;
c) eine Recheneinheit zur Verknüpfung des Beschleunigungssignals mit dem Erkennungssignal und zur Ermittlung des Crashtyp-Bestimmungssignals;
d) eine Ausgabeeinheit zur Ausgabe eines mittels der Recheneinheit ermittelten Crashtyp-Bestimmungssignals; und
e) eine Ansteuereinheit zur Ansteuerung der Rückhaltemittel in Abhängigkeit von dem ausgegebenen Crashtyp-Bestimmungssignal.

In den Unteransprüchen finden sich vorteilhafte Weiterbildungen und Verbesserungen des jeweiligen Gegenstandes der Erfindung.

Gemäß einer bevorzugten Weiterbildung der vorliegenden Erfindung umfasst das Verknüpfen des Beschleunigungssignals mit dem Erkennungssignal mittels der Recheneinheit und das Ermitteln des Crashtyp-Bestimmungssignals die folgenden Schritte:
a) Ermitteln eines ersten Bestimmungssignals mittels eines ersten Rechenmoduls;
b) Ermitteln eines zweiten Bestimmungssignals mittels eines zweiten Rechenmoduls;
c) Verknüpfen der ersten und der zweiten Bestimmungssignale mittels einer Verknüpfungseinheit; und
d) Ausgeben eines von der Verknüpfung der ersten und zweiten Bestimmungssignale abhängigen Bestimmungssignals.

Gemäß einer weiteren bevorzugten Weiterbildung der vorliegenden Erfindung wird bei einem Ausfall des von dem vorausschauenden Sensor erfassten Erkennungssignals das Ermitteln des Crashtyp-Bestimmungssignals in Abhängigkeit von dem Beschleunigungssignal vorgenommen.

Gemäß noch einer weiteren bevorzugten Weiterbildung der vorliegenden Erfindung ist der vorausschauende Sensor beispielsweise als ein Radar-, Lidar- oder Ultraschallsensor oder als ein optischer Sensor ausgebildet. Vorzugsweise umfasst der optische Sensor eine eindimensionale, zweidimensionale oder dreidimensionale optische Detektoreinrichtung.

Auf diese Weise ermöglichen es das Verfahren und die Vorrichtung der vorliegenden Erfindung, dass eine Trennfähigkeit bzw. Differenzierung zwischen unterschiedlichen Crashtypen wie beispielsweise einem AZT-Crash und einem ODB-Crash deutlicht verbessert wird. Bei einem Nicht-vorhandensein einer zusätzlichen Geschwindigkeitsinformation arbeiten das Verfahren und die Vorrichtung der vorliegenden Erfindung an Hand herkömmlich bereitgestellter Beschleunigungssignale.

### ZEICHNUNGEN

Ausführungsbeispiele der Erfindung sind in den Zeichnungen dargestellt und in der nachfolgenden Beschreibung näher erläutert.

In den Zeichnungen zeigen:
- Fig. 1: ein Blockdiagramm einer Vorrichtung zur Bestimmung eines Crashtyps bei einem Fahrzeugcrash in einem Blockbild gemäß einem bevorzugten Ausführungsbeispiel der vorliegenden Erfindung;
- Fig. 2: eine Veranschaulichung des erfindungsgemäßen Verfahrens zur Ermittlung eines Bestimmungssignals für eine Auslöseentscheidung gemäß einem in einer Recheneinheit der in Fig. 1 gezeigten Vorrichtung ablaufenden Algorithmus;
- Fig. 3: ein Blockbild zur Ermittlung eines Bestimmungssignals für eine Auslöseentscheidung an Hand unterschiedlicher Bestimmungspfade, welche einen Crashtyp und/oder eine Crashschwere bestimmen, sowie den erfindungsgemäßen Pfad unter Berücksichtigung einer Relativgeschwindigkeitsinformation; und
- Fig. 4: ein Blockbild zur Veranschaulichung des erfindungsgemäßen Verfahrens, das nur dann durchlaufen wird, wenn zusätzlich zu Beschleunigungssignalen eine entsprechende Geschwindigkeitsinformation vorliegt.

In den Figuren bezeichnen gleiche Bezugszeichen gleiche oder funktionsgleiche Komponenten oder Schritte.

### BESCHREIBUNG DER AUSFÜHRUNGSBEISPIELE

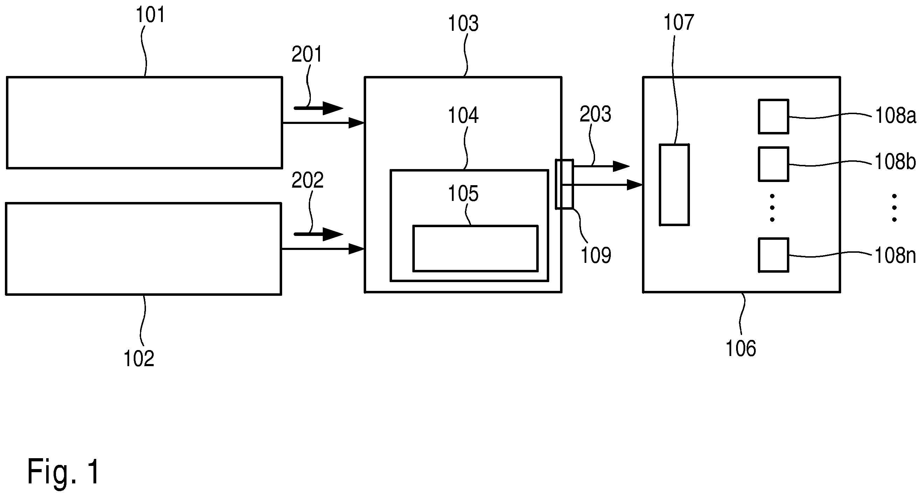

Fig. 1 zeigt ein Blockbild der erfindungsgemäßen Vorrichtung zur Bestimmung eines Crashtyps bei einem Fahrzeugcrash eines mit Rückhaltemitteln 108a-108n ausgestatteten Fahrzeugs (nicht gezeigt). Hierbei liefert ein Aufprallsensor 101, der beispielsweise als ein Beschleunigungssensor oder ein Drucksensor ausgebildet sein kann, ein Sensorsignal 201 bei einem Fahrzeugaufprall auf ein Hindernis (Objekt). Das Sensorsignal 201 wird einer Steuereinrichtung 103 zugeführt. Ferner umfasst die erfindungsgemäße Vorrichtung einen vorausschauenden Sensor 102, der beispielsweise als ein Radar-, Lidar- oder ein Ultraschallsensor oder als eine optische Überwachungseinrichtung wie beispielsweise eine eindimensionale, zweidimensionale oder dreidimensionale Kamera ausgebildet sein kann.

Ein derartiger vorausschauender Sensor 102 gibt ein Erkennungssignal 202 zu der Steuereinrichtung 103 aus. Die Steuereinrichtung 103 weist eine Prozessoreinheit 104 auf, in welcher unter anderem das Sensorsignal 201 und das Erkennungssignal 202 verarbeitet werden. In der Prozessoreinheit 104 ist eine Recheneinheit 105 angeordnet, in der vorgebbare Algorithmen zur Erzeugung eines Auslöseentscheidungssignals zur Auslösung von Rückhaltemitteln ablaufen. Das Auslöseentscheidungssignal ist das Ergebnis einer Berechnung einer Auslöseentscheidung, welche auch auf Sensorsignalen basiert. Derartige Sensorsignale sind unter anderem Beschleunigungssignale, Körperschallsignale oder Drucksignale. Die Beschleunigungssignale werden beispielsweise von Sensoren geliefert, die in der Steuereinrichtung 103 oder außerhalb der Steuereinrichtung 103 beispielsweise an der Fahrzeugfront (beispielsweise Upfrontsensoren UFS) oder an der Fahrzeuglängsseite (beispielsweise periphere Beschleunigungssensoren (PAS, peripheral acceleration sensors) an der B-Säule) angeordnet sind.

Die aus diesen Signalen berechneten Merkmale werden mit unterschiedlichen Schwellwerten oder Kennlinien verglichen, so dass dann über eine Auslösung und eine Auslösezeit entschieden werden kann. Nach der Bereitstellung des Auslösesignals 203 wird dieses einer Ansteuereinheit 107, die mit einer Rückhalteeinheit 106 zusammenwirkt, ausgegeben. Die Rückhalteeinrichtung 106 umfasst ferner die Rückhaltemittel 108a-108n, welche irreversibel (Airbags) oder reversibel (beispielsweise elektromotorische Gurtstraffer, crashaktive Kopfstützen) ausgelegt sein können.

Unterschiedliche Algorithmentypen können in der Recheneinheit 105 der Prozessoreinheit 104 ablaufen. Bei einem ersten Algorithmentyp werden die vorgegebenen Schwellenwerte für sämtliche Tests unabhängig von einem Crashtyp verglichen.

Ein weiterer Algorithmentyp umfasst Verfahren, bei denen zusätzlich zu den Beschleunigungssignalen bzw. Drucksignalen (Sensorsignal 201) Daten einer vorausschauenden Umfeldsensierung zur Berechnung der Auslöseentscheidung mit herangezogen werden. Derartige Erkennungssignale 202 umfassen beispielsweise die Relativgeschwindigkeit zwischen dem mit Rückhaltemitteln 108a-108n ausgestatteten Fahrzeug und einem Objekt, wobei ein Aufprall zwischen dem Fahrzeug und dem Objekt unmittelbar bevorsteht. Beispielsweise wird eine Relativgeschwindigkeit dann auf eine zeitabhängige Schwelle einwirken, die beispielsweise mit dem zweiten Integral des Beschleunigungssignals verglichen wird. Wird diese Schwelle überschritten, wird das mit Hilfe dieser Schwelle identifizierte Rückhaltemittel entsprechend ausgelöst. Wie bei dem ersten Algorithmentyp werden mit dieser Schwelle sämtliche Crashs unabhängig vom Crashtyp verglichen.

Ferner sind Algorithmen von einem dritten Typ vorhanden, bei welchen zunächst die Relativgeschwindigkeit zur Berechnung der Auslöseentscheidung nicht berücksichtigt wird, und bei welchen der Crash zunächst unterschiedlichen Crashklassen zugeordnet wird. Eine derartiger Crashklasse kann beispielsweise durch einen bestimmten Crashtyp definiert werden. Entsprechend dem Crashtyp werden dann in dem Algorithmus ein oder mehrere spezifische Pfade durchlaufen, bei welchen unterschiedliche Kriterien hinsichtlich der Crashsignale herangezogen werden. Derartige unterschiedliche Pfade gestatten es, dass für den jeweiligen Crashtyp eine differenzierte Berechnung mit der Auslöseentscheidung ermöglicht wird.

Die erfindungsgemäße Vorrichtung stellt einen weiteren Pfad zur Verfügung, der es erlaubt, bei einem Vorliegen einer Geschwindigkeitsinformation (beispielsweise einer Relativgeschwindigkeit) exakter zwischen unterschiedlichen Crashtypen wie beispielsweise einem AZT-Crashtest und einem ODB-Crashtest zu unterscheiden. In vorteilhafter Weise wird auch bei einem Nicht-Vorliegen der Geschwindigkeitsinformation eine Auslösung der Rückhaltemittel ermöglicht.

Die unter Bezugnahme auf Fig. 1 erläuterte Vorrichtung zur Crashtyp-Erkennung besteht im Wesentlichen aus den Komponenten Sensorik (Bezugszeichen 101 und 102), Steuereinrichtung (Bezugszeichen 103) und Rückhalteeinrichtung (Bezugszeichen 106). In der Sensorik wird zumindest ein Aufprallsensor 101 und ein vorausschauender Sensor 102 eingesetzt. Der Aufprallsensor kann beispielsweise in Form eines Beschleunigungssensors oder eines Drucksensors ausgebildet sein, während der vorausschauende Sensor beispielsweise in der Form eines Ultraschallsensors, eines Radarsensors, eines Lidarsensors oder eines optischen Sensors wie beispielsweise einer optischen Kamera in eindimensionaler, zweidimensionaler oder dreidimensionaler Auslegung (Zeilen- oder Flächenkamera) verwirklicht sein.

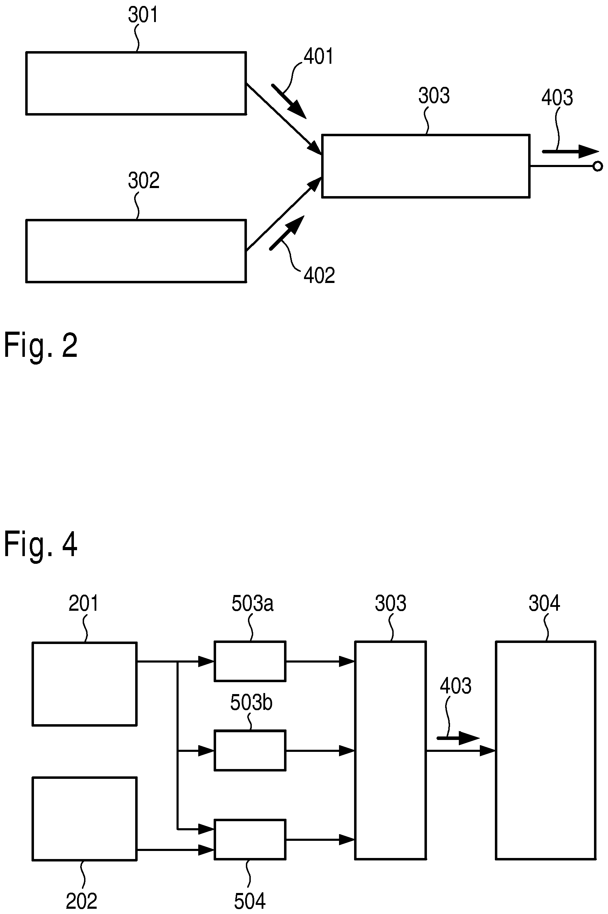

Die Steuereinrichtung 103 liest die Sensordaten ein und berechnet daraus die Auslöseentscheidung für die entsprechenden Rückhaltemittel 108a-108n. In der Prozessoreinheit 104 bzw. der Recheneinheit 105 der Prozessoreinheit läuft ein entsprechender Algorithmus ab, der im Folgenden näher erläutert wird. Weiterhin ist es möglich, dass der Algorithmus direkt in der Prozessoreinheit 104 abläuft. Der in der Recheneinheit 105 oder der Prozessoreinheit 104 ablaufende Algorithmus gliedert sich grundsätzlich in die unter Bezugnahme auf Fig. 2 untenstehenden beschriebenen drei Module.

Fig. 2 veranschaulicht die Zusammenwirkung der drei Module, d.h. eines ersten Rechenmoduls 301, eines zweiten Rechenmoduls 302, und einer Auslösebestimmungseinheit 303. Das erste Rechenmodul 301 liefert ein erstes Bestimmungssignal 401, das zu der Auslösebestimmungseinheit 303 ausgegeben wird, während aus dem zweiten Rechenmodul 302 ein zweites Bestimmungssignal 402 zu der Auslösebestimmungseinheit 303 ausgegeben wird. In der Auslösebestimmungseinheit 303 wird ein Bestimmungssignal 403 ermittelt und ausgegeben.

In dem ersten Rechenmodul 301 läuft ein Auslösealgorithmus ab, der einen oder mehrere der oben beschriebenen ersten, zweiten und dritten Algorithmentypen umfasst. In dem zweiten Rechenmodul 302 läuft ein Algorithmus ab, der eine verbesserte Rückhaltemittelauslöseentscheidung im Falle eines AZT- bzw. ODB-Crashs ermöglicht. Die Auslösebestimmungseinheit 303 fusioniert die von dem ersten Rechenmodul 301 und dem zweiten Rechenmodul 302 ausgegebenen ersten und zweiten Bestimmungssignale 401, 402, derart, dass die in den ersten und zweiten Rechenmodulen 301, 302 getrennt ermittelten Auslöseentscheidungen gemeinsam verarbeitet werden. Der Auslösealgorithmus, der in dem ersten Rechenmodul 301 abläuft, kann parallel und unabhängig von dem ODB-Algorithmus, der in dem zweiten Rechenmodul 302 abläuft, bereitgestellt werden.

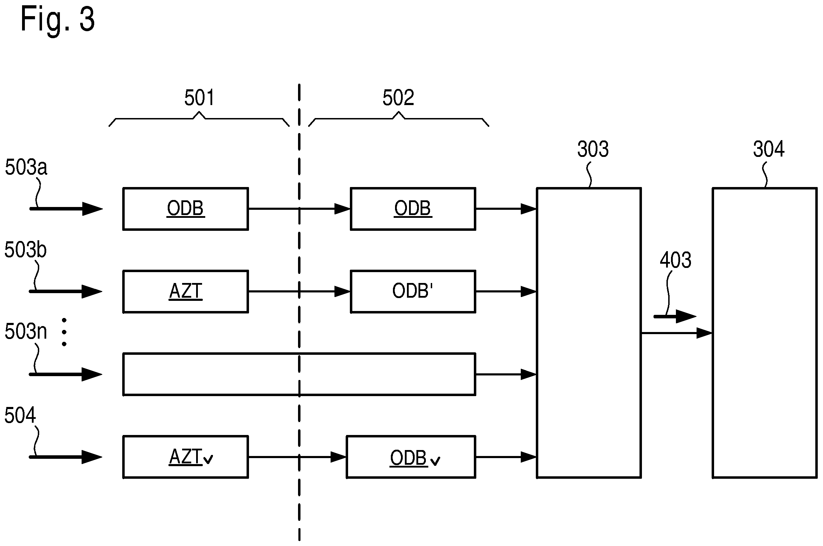

Fig. 3 veranschaulicht Pfade eines erfindungsgemäßen Auslösealgorithmus gemäß einem bevorzugten Ausführungsbeispiel der Erfindung. Wie in Fig. 3 gezeigt, wird die Auslöseentscheidung hinsichtlich des Crashtyps in zwei Verarbeitungsschritte geteilt, d.h. eine Crashtyp-Ermittlungsverarbeitung 501 und eine Crashschwere-Ermittlungsverarbeitung 502. Ferner sind unterschiedliche Ermittlungspfade 503a-503n angegeben, die in dem Auslöseentscheidungs-Algorithmus ablaufen. Ein unten in Fig. 3 gezeigter, erfindungsgemäßer Ermittlungspfad bei Vorliegen einer Geschwindigkeitsinformation ist mit dem Bezugszeichen 504 gekennzeichnet. In der Vermittlungsverarbeitung bezeichnet ODB den Algorithmusteil, der im Falle eines ODB-Crashtest (Offset-Deformable-Barrier-Crashtest) benutzt wird, und AZT den Algorithmusteil, der im Falle eines Allianz-Zentrum-für-Technik-Crashtest (AZT-Crashtest) benutzt wird. Die mit dem Index v versehenen Größen bezeichnen die entsprechenden Fälle bei Vorliegen der Geschwindigkeitsinformation und ODB' bezeichnet den Algorithmusteil, der zur robusten Auslösung im Falle eines ODB-Crashs verwendet wird.

Im Falle einer Ermittlung eines AZT-Crashtyps wird grundsätzlich keines der Rückhaltemittel 108a-108n (siehe Fig. 1) ausgelöst. Wird ein AZT-Crash klassifiziert, kann über das ODB-Robust-Modul, das in dem Ermittlungspfad 503b dargestellt ist, sichergestellt werden, dass dennoch bei einem sehr schweren Crash vom ODB-Typ eines oder mehrere Rückhaltemittel 108a-108n ausgelöst werden. Ferner ist es möglich, beliebig viele Crashtypen unter Verwendung entsprechender Ermittlungspfade 503c-503n zu behandeln.

Der mit dem Bezugszeichen 504 bezeichnete Pfad wird durch den erfindungsgemäßen Algorithmus nur dann durchlaufen, wenn zusätzlich zu den Sensorsignalen, d.h. dem Beschleunigungssignal 201, weitere von einer vorausschauenden Sensorik ermittelte Information wie die Relativgeschwindigkeits-Information vorliegt (siehe auch untenstehend Fig. 4). Hierbei sind die Relativgeschwindigkeit und die Beschleunigungssignale vorzugsweise derart gestaltet, dass grundsätzlich auf einen Nichtauslösecrash wie beispielsweise einem AZT-Crash geschlossen werden kann. Eine derartige Entscheidung wird in dem mit AZTᵥ bezeichneten Modul durchgeführt.

Für den Fall, dass ein Crash fälschlicherweise als ein Nichtauslösecrash klassifiziert worden ist, obwohl es sich tatsächlich um einen Auslösecrash wie beispielsweise einen ODB-Crash handelt, wird bei der Crashschwere-Ermittlungsverarbeitung 502 ein mit dem Bezugszeichen ODBᵥ bezeichnetes Modul herangezogen. Falls ein derartiger Crash nun doch als ein Auslösecrash qualifiziert wird, kann in diesem Modul ODBᵥ über die Auslösung der Rückhaltemittel 108a-108n entschieden werden. Ein wesentlicher Unterschied zu dem oben unter Bezugnahme auf den Pfad 503b beschriebenen ODB-Robust-Modul (Bezugszeichen ODB') besteht darin, dass der Ermittlungspfad 504 nur bei einem Vorliegen einer Relativgeschwindigkeits-Information durchlaufen wird, die mittels des vorausschauenden Sensors 102 (Fig. 1) erfasst wird, oder dass im vereinfachten Fall der Ermittlungspfad 504 bei Vorliegen der Eigengeschwindigkeit durchlaufen wird, die mit einem System zur Erfassung der Eigengeschwindigkeit ermittelt wird.

Somit liegen die Sensorsignale 201 der Aufprallsensoren 101 und die Signale einer vorausschauenden Sensorik, d.h. die Erkennungssignale 202 einer vorausschauenden Sensorik 102 als unabhängige Informationen vor, wodurch eine Verlässigkeit, dass es sich um einen bestimmten Crashtyp handelt, bei dem nicht ausgelöst werden muss, wesentlich höher als in dem mit dem Bezugszeichen 503b bezeichneten Pfad ist. Hierdurch kann mit Hilfe des Moduls ODBᵥ bei der Crashschwere-Ermittlungsverarbeitung 502 zuverlässiger und sensibler auf einen Auslösecrash reagiert werden als durch das Modul ODB'. Auf diese Weise wird die erfindungsgemäße Aufgabe gelöst, eine Trennfähigkeit zwischen Nichtauslösecrashs und Auslösecrashs zu erhöhen.

Fig. 4 zeigt schließlich ein Blockdiagramm zur Veranschaulichung einer Ermittlung des Bestimmungssignals 403. Ein Beschleunigungssignal 201 wird in sämtlichen Pfaden 503a, 503b, 504 zur Berechnung herangezogen. Falls ein Erkennungssignal 202, das eine Relativgeschwindigkeits-Information widerspiegelt, zur Verfügung steht, wird dieses in dem Ermittlungspfad 504 zusätzlich berücksichtigt. Eine Fusionierung sämtlicher Pfade in einer Auslösebestimmungseinheit 303 gestattet es, ein Bestimmungssignal 403 zu erzeugen, dass eine hohe Trennfähigkeit zwischen Nichtauslösecrashs und Auslösecrashs bereitstellt. Somit ist es durch die Erzeugung des Bestimmungssignals 403 möglich, eine Auslöseentscheidung 302 zu treffen, die die Trennfähigkeit zwischen Nichtauslösecrashs und Auslösecrashs bei einer vorliegenden GeschwindigkeitsInformation verbessert.

Ferner werden die folgenden Vorteile bereitgestellt:
(i) bei einem gleich bleibenden ODB-Betriebsverhalten können AZT-Crashs zuverlässiger erkannt werden, derart, dass eine zuverlässigere Nicht-Auslösung bei AZT-Crashs bereitgestellt wird;
(ii) bei einem gleich bleibenden AZT-Betriebsverhalten können ODB-Crashtypen präziser erkannt werden, derart, dass in diesem Fall sensibler ausgelöst werden kann; und
(iii) es besteht die Möglichkeit, einen optimierten Kompromiss zwischen den unter (i) und (ii) oben bezeichneten Auslösebedingungen bereitzustellen.

In vorteilhafter Weise ermöglicht der aus den Pfaden 503a-503n bestehende Auslösealgorithmus auch eine Auslösung der Rückhaltemittel, falls beispielsweise keine Geschwindigkeitsinformation vorliegt und der Pfad 504 (Fig. 3) nicht beschritten werden kann.

Ferner ergeben sich durch die erfindungsgemäße Vorrichtung und das erfindungsgemäße Verfahren Vorteile dahingehend, dass es durch die zusätzliche Geschwindigkeitsinformation möglich ist, im Algorithmus einen weiteren Pfad zu durchlaufen. Dieser Pfad erlaubt es, bei Vorliegen der Geschwindigkeitsinformation genauer zwischen einem Auslöse- und einem Nichtauslösecrash zu unterscheiden, dass aber bei nicht Vorhandensein der Geschwindigkeitsinformation die Leistungsfähigkeit des rein beschleunigungsbasierten Teils dennoch gegeben ist.

Weiterhin ist es möglich, dass mittels der erfassten Geschwindigkeitsinformation und unter Verwendung der Sensorsignale auf einen Nichtauslösecrash geschlossen wird.

Außerdem ist ein Algorithmusteil für eine robuste Auslösung der Rückhaltemittel in dem Fall bereitgestellt, dass ein Crash auf der Basis der Beschleunigungs- und Sensorsignale fälschlicherweise als Nichtauslösecrash erkannt wird, obwohl es sich um einen Auslösecrash handelt. Durch die Unabhängigkeit beider Signale kann verlässlicher auf den Nichtauslösecrash geschlossen werden. Somit kann das ODBv-Modul (ODB-CV-Modul) sensibler auf einen auszulösenden Crash reagieren als das ODB'-Modul (ODB-Robust-Modul).

Obwohl die vorliegende Erfindung vorstehend anhand bevorzugter Ausführungsbeispiele beschrieben wurde, ist sie darauf nicht beschränkt, sondern auf vielfältige Weise modifizierbar.

Auch ist die Erfindung nicht auf die genannten Anwendungsmöglichkeiten beschränkt.

## Patentansprüche

1. Verfahren zum Bestimmen eines Crashtyps bei einem Fahrzeugcrash eines mit Rückhaltemitteln (108a-108n) ausgestatteten Fahrzeugs mit einem Objekt, mit den Schritten:
a) Erfassen eines Sensorsignals (201) mittels eines Aufprallsensors (101), wobei das Sensorsignal (201) eine Beschleunigung des Fahrzeugs bei dem Fahrzeugcrash anzeigt;
b) Erfassen eines Erkennungssignals (202) mittels eines vorausschauenden Sensors (102), wobei das Erkennungssignal (202) eine Relativgeschwindigkeit zu dem Objekt vor dem Fahrzeugcrash und/oder eine Eigengeschwindigkeit anzeigt;
c) Verknüpfen des Beschleunigungssignals (201) mit dem Erkenhungssignal (202) mittels einer Recheneinheit (105) und Ermitteln eines, Auslöseentscheidungssignals (203);
d) Ausgeben des mittels der Recheneinheit (105) ermittelten Auslöseentscheidungssignals (203) zu einer Ansteuereinheit (107); und
e) Ansteuern der Rückhaltemittel (108a-108n) in Abhängigkeit von dem Auslöseentscheidungssignal (203), **dadurch gekennzeichnet, dass** in einem ersten Rechenmodul (301 der Recheneinheit (105) wenigstens ein erster Auslösealgorithmus auf Basis des Beschleunigungssignals zur Ausgabe eines ersten Bestimmungssignals (401) abläuft, dass in einem zweiten Rechenmodul (302) der Recheneinheit (105) ein ODB-Algorithmus auf Basis des Beschleunigungssignals und des Erkennungssignals (202) zur Ausgabe eines zweiten Bestimmungssignals (402) abläuft, dass eine Auslösebestimmungseinheit (303) das erste und das zweite Bestimmungssignal (401, 402) zu dem Auslöseentscheidungssignal fusioniert

2. Verfahren nach Anspruch 1, **dadurch gekennzeichnet, dass** bei einem Ausfall des von dem vorausschauenden Sensor (102) erfassten Erkennungssignals (202) das Ermitteln des Auslöseentscheidungssignals (203) in Abhängigkeit von dem Beschleunigungssignal (201) vorgenommen wird.

3. Verfahren nach Anspruch 1, **dadurch gekennzeichnet, dass** das Erkennungssignal (202) von einem Videosensor bereitgestellt wird.

4. Vorrichtung zur Bestimmung eines Crashtyps bei einem Fahrzeugcrash eines mit Rückhaltemitteln (108a-108n) ausgestatteten Fahrzeugs mit einem Objekt, aufweisend:
a) einen Aufprallsensor (101) zur Erfassung eines Sensorsignals (201), wobei das Sensorsignal (201) eine Beschleunigung des Fahrzeugs bei dem Fahrzeugcrash anzeigt;
b) einen vorausschauenden Sensor (102) zur Erfassung eines Erkennungssignals (202), wobei das Erkennungssignal (202) eine Relativgeschwindigkeit zu dem Objekt vor dem Fahrzeugcrash und/oder eine Eigengeschwindigkeit anzeigt;
c) eine Recheneinheit (105) zur Verknüpfung des Sensorsignals (201) mit dem Erkennungssignal (202) und zur Ermittlung des Auslöseentscheidungssignals (203);
d) eine Ausgabeeinheit (109) zur Ausgabe des mittels der Recheneinheit (105) ermittelten Auslöseentscheidungssignals (203); und
e) eine Ansteuereinheit (107) zur Ansteuerung der Rückhaltemittel (108a-108n) in Abhängigkeit von dem ausgegebenen Auslöseentscheidungssignal (203), **dadurch gekennzeichnet, dass** die Recheinheit (105) ein erstes Rechenmodul (301) auf dem wenigstens ein erster Auslösealgorithmus auf Basis des Beschleunigungssignals zur
Ausgabe eines ersten Bestimmungssignals (401) abläuft, ein zweites Rechenmodul (302), auf dem ein ODB-Algorithmus auf Basis des Beschleunigungssignals und des Erkennungssignals (202) zur Ausgabe eines zweiten Bestimmungssignals (402) abläuft, und eine Auslösebestimmungseinheit (303) aufweist, wobei die Auslösebestimmungseinheit (303) das erste und das zweite Bestimmungssignal (401, 402) zu dem Auslöseentscheidungssignal fusioniert.

5. Vorrichtung nach Anspruch 4, **dadurch gekennzeichnet, dass** der vorausschauende Sensor (102) als ein Ultraschallsensor, ein Radarsensor, ein Lidarsensor oder als ein optischer Sensor ausgebildet ist.

6. Vorrichtung nach Anspruch 5, **dadurch gekennzeichnet, dass** der als ein optischer Sensor ausgebildete vorausschauende Sensor (102) als eine eindimensionale, zweidimensionale oder dreidimensionale optische Detektoreinrichtung ausgelegt ist.

7. Vorrichtung nach Anspruch 4, **dadurch gekennzeichnet, dass** bei der Ermittlung des Auslöseentscheidungssignals (203) mittels der Recheneinheit (105) durch die Relativgeschwindigkeitsinformation im Algorithmus ein weiterer Pfad durchlaufen werden kann, welcher es zulässt, bei einem Vorhandensein der Relativgeschwindigkeitsinformation genauer zwischen einem Auslösecrash und einem Nichtauslösecrash unterschieden werden kann, wobei ferner bei einem Nicht-Vorhandensein der Relativgeschwindigkeitsinformation eine Leistungsfähigkeit eines lediglich beschleunigungsbasierten Algorithmustells aufrecht erhalten bleibt.

8. Vorrichtung nach Anspruch 4, **dadurch gekennzeichnet, dass** bei der Ermittlung des Auslöseentscheidungssignals (203) mittels der Recheneinheit (105) eine Bestimmung eines Nichtauslösecrashs auf der Grundlage der Relativgeschwindigkeitsinformation und der Sensorsignale durchführbar ist.

9. Vorrichtung nach Anspruch 4, **dadurch gekennzeichnet, dass** in der Recheneinheit (105) ein Algorithmusteil für eine robuste Auslösung der Rückhaltemittel in dem Fall bereitgestellt ist, dass ein Crash auf der Basis der Beschleunigungs- und Sensorsignale fälschlicherweise als Nichtauslösecrash erkannt wird, obwohl es sich um einen Aüslösecrash handelt, wobei durch eine Unabhängigkeit beider Signale auf den Nichtauslösecrash geschlossen werden kann.

## Claims

1. Method for crash type recognition in the case of a crash of a vehicle which is equipped with restraint means (108a-108n), with an object, having the steps:
a) acquiring a sensor signal (201) by means of an impact sensor (101), wherein the sensor signal (201) indicates an acceleration of the vehicle during the crash of the vehicle;
b) acquiring a detection signal (202) by means of a predictive sensor (102), wherein the detection signal (202) indicates a relative speed with respect to the object before the crash of the vehicle and/or an actual speed of the vehicle;
c) linking the acceleration signal (201) to the detection signal (202) by means of a computing unit (105) and obtaining a triggering decision signal (203);
d) outputting the triggering decision signal (203), obtained by means of the computing unit (105), to an actuation unit (107); and
e) actuating the restraint means (108a-108n) as a function of the triggering decision signal (203), **characterized in that** in a first computing module (301) of the computing unit (105) at least a first triggering algorithm runs on the basis of the acceleration signal for outputting a first determination signal (401), **in that** in a second computing module (302) of the computing unit (105) an ODB algorithm runs on the basis of the acceleration signal and of the detection signal (202) for outputting a second determination signal (402), **in that** a triggering determination unit (303) combines the first and second determination signals (401, 402) to form the triggering decision signal.

2. Method according to Claim 1, **characterized in that** in the event of a failure of the detection signal (202) which is acquired by the predictive sensor (102), the triggering decision signal (203) is obtained as a function of the acceleration signal (201) .

3. Method according to Claim 1, **characterized in that** the detection signal (202) is provided by a video sensor.

4. Device for determining a crash type in the event of a crash of a vehicle which is equipped with restraint means (108a-108n), with an object, having:
a) an impact sensor (101) for acquiring a sensor signal (201), wherein the sensor signal (201) indicates an acceleration of the vehicle during the crash of the vehicle;
b) a predictive sensor (102) for acquiring a detection signal (202), wherein the detection signal (202) indicates a relative speed with respect to the object before the crash of the vehicle and/or an actual speed of the vehicle;
c) a computing unit (105) for linking the sensor signal (201) to the detection signal (202) and for obtaining the triggering decision signal (203);
d) an output unit (109) for outputting the triggering decision signal (203) which is determined by means of the computing unit (105); and
e) an actuation unit (107) for actuating the restraint means (108a-108n) as a function of the triggering decision signal (203) which is output, **characterized in that** the computing unit (105) has a first computing module (301) on which at least a first triggering algorithm runs on the basis of the acceleration signal for outputting a first determination signal (401), a second computing module (302) on which an ODB algorithm runs on the basis of the acceleration signal and of the detection signal (202) for outputting a second determination signal (402), and a triggering determination unit (203), wherein the triggering determination unit (303) combines the first and second determination signals (401, 402) to form the triggering decision signal.

5. Device according to Claim 4, **characterized in that** the predictive sensor (102) is embodied as an ultrasonic sensor, a radar sensor, a lidar sensor or as an optical sensor.

6. Device according to Claim 5, **characterized in that** the predictive sensor (102) which is embodied as an optical sensor is configured as a one-dimensional, two-dimensional or three-dimensional optical detector device.

7. Device according to Claim 4, **characterized in that** when the triggering decision signal (203) is being obtained by means of the computing unit (105) using the relative speed information in the algorithm, a further path can be run through which permits a more precise differentiation to be made between a triggering crash and a non-triggering crash given the presence of the relative speed information, wherein in addition when the relative speed information is not present an efficiency level of a part of an algorithm which is only based on acceleration is maintained.

8. Device according to Claim 4, **characterized in that** when the triggering decision signal (203) is being obtained by means of the computing unit (105), a non-triggering crash can be determined by means of the computing unit (105) on the basis of the relative speed information and the sensor signals.

9. Device according to Claim 4, **characterized in that** in the computing unit (105) a part of the algorithm is provided for robust triggering of the restraint means in the event of a crash being incorrectly detected as a non-triggering crash on the basis of the acceleration signals and sensor signals even though it is a triggering crash, wherein the non-triggering crash can be inferred through independence of the two signals.

## Revendications

1. Procédé de détermination d'un type de collision lors d'une collision de véhicule avec un objet d'un véhicule équipé de moyens de retenue (108a-108n), comprenant les étapes suivantes :
a) acquisition d'un signal de détecteur (201) au moyen d'un détecteur d'impact (101), le signal de détecteur (201) indiquant une accélération du véhicule lors de la collision de véhicule ;
b) acquisition d'un signal de reconnaissance (202) au moyen d'un détecteur prévisionnel (102), le signal de reconnaissance (202) indiquant une vitesse relative par rapport à l'objet avant la collision de véhicule et/ou une vitesse propre ;
c) liaison du signal de détecteur (201) avec le signal de reconnaissance (202) au moyen d'une unité de calcul (105) en vue de déterminer un signal de décision de déclenchement (203) ;
d) délivrance du signal de décision de déclenchement (203) déterminé au moyen de l'unité de calcul (105) à une unité de commande (107) et
e) commande des moyens de retenue (108a-108n) en fonction du signal de décision de déclenchement (203), **caractérisé en ce que** dans un premier module de calcul (301) de l'unité de calcul (105) est exécuté au moins un premier algorithme de déclenchement sur la base du signal d'accélération en vue de délivrer un premier signal de détermination (401), **en ce que** dans un deuxième module de calcul (302) de l'unité de calcul (105) est exécuté un algorithme ODB sur la base du signal d'accélération et du signal de reconnaissance (202) en vue de délivrer un deuxième signal de détermination (402), **en ce qu'**une unité de détermination de déclenchement (303) fusionne le premier et le deuxième signal de détermination (401, 402) en le signal de décision de déclenchement.

2. Procédé selon la revendication 1, **caractérisé en ce que** dans le cas d'une panne du signal de reconnaissance (202) acquis par le détecteur prévisionnel (102), la détermination du signal de décision de déclenchement (203) s'effectue en fonction du signal d'accélération (201).

3. Procédé selon la revendication 1, **caractérisé en ce que** le signal de reconnaissance (202) est fourni par un détecteur vidéo.

4. Arrangement de détermination d'un type de collision lors d'une collision de véhicule avec un objet d'un véhicule équipé de moyens de retenue (108a-108n), comprenant :
a) un détecteur d'impact (101) destiné à acquérir un signal de détecteur (201), le signal de détecteur (201) indiquant une accélération du véhicule lors de la collision de véhicule ;
b) un détecteur prévisionnel (102) destiné à acquérir un signal de reconnaissance (202), le signal de reconnaissance (202) indiquant une vitesse relative par rapport à l'objet avant la collision de véhicule et/ou une vitesse propre ;
c) une unité de calcul (105) destinée à lier le signal de détecteur (201) avec le signal de reconnaissance (202) en vue de déterminer un signal de décision de déclenchement (203) ;
d) une unité de sortie (109) destinée à délivrer le signal de décision de déclenchement (203) déterminé au moyen de l'unité de calcul (105) ; et
e) une unité de commande (107) destinée à commander les moyens de retenue (108a-108n) en fonction du signal de décision de déclenchement (203) délivré, **caractérisé en ce que** l'unité de calcul (105) possède un premier module de calcul (301) sur lequel est exécuté au moins un premier algorithme de déclenchement sur la base du signal d'accélération en vue de délivrer un premier signal de détermination (401), un deuxième module de calcul (302) sur lequel est exécuté un algorithme ODB sur la base du signal d'accélération et du signal de reconnaissance (202) en vue de délivrer un deuxième signal de détermination (402), et une unité de détermination de déclenchement (303), l'unité de détermination de déclenchement (303) fusionnant le premier et le deuxième signal de détermination (401, 402) en le signal de décision de déclenchement.

5. Arrangement selon la revendication 4, **caractérisé en ce que** le détecteur prévisionnel (102) est réalisé sous la forme d'un détecteur à ultrasons, d'un détecteur radar, d'un détecteur lidar ou d'un détecteur optique.

6. Arrangement selon la revendication 5, **caractérisé en ce que** le détecteur prévisionnel (102) réalisé sous la forme d'un détecteur optique est conçu sous la forme d'un dispositif détecteur unidimensionnel, bidimensionnel ou tridimensionnel.

7. Arrangement selon la revendication 4, **caractérisé en ce que** lors de la détermination du signal de décision de déclenchement (203) au moyen de l'unité de calcul (105), l'information de vitesse relative permet de traverser un chemin supplémentaire dans l'algorithme, lequel permet de différencier avec plus de précision une collision avec déclenchement d'une collision sans déclenchement lors d'une présence de l'information de vitesse relative, une capacité d'une partie d'algorithme uniquement basée sur l'accélération étant en outre maintenue dans le cas d'une non-présence de l'information de vitesse relative.

8. Arrangement selon la revendication 4, **caractérisé en ce que** lors de la détermination du signal de décision de déclenchement (203) au moyen de l'unité de calcul (105), une détermination d'une collision sans déclenchement pouvant être effectuée sur la base de l'information de vitesse relative et des signaux de détecteur.

9. Arrangement selon la revendication 4, **caractérisé en ce que** l'unité de calcul (105) contient une partie d'algorithme pour un déclenchement robuste des moyens de retenue dans le cas où, sur la base des signaux d'accélération et de détecteur, une collision est reconnue par erreur comme une collision sans déclenchement bien qu'il s'agisse d'une collision avec déclenchement, la collision sans déclenchement étant déduite par une indépendance des deux signaux.
